# EUROPÄISCHE PATENTSCHRIFT

(11) **EP 0 425 865 B1**
(45) Veröffentlichungstag und Bekanntmachung des Hinweises auf die Patenterteilung: **14.07.1993**
(21) Anmeldenummer: 90119575.0
(22) Anmeldetag: 12.10.1990
(51) Int. Cl.: F16D 3/84

(54) **Faltenbalg**
Bellows
Soufflet

(30) Priorität: 31.10.1989 DE 3936277
(43) Veröffentlichungstag der Anmeldung: 08.05.1991
(73) Patentinhaber: GKN AUTOMOTIVE AKTIENGESELLSCHAFT, D-53721 Siegburg (DE)
(72) Erfinder: Schafferus, Thomas, W-4134 Rheinberg 1 (DE); Müller, Karl-Heinz, W-5248 Wissen (DE)
(74) Vertreter: Neumann, Ernst Dieter, Dipl.-Ing.

(56) Entgegenhaltungen:
- DE-A- 3 417 709
- FR-A- 2 434 305
- GB-A- 1 218 729
- GB-A- 2 115 520
- GB-A- 2 197 699

## Beschreibung

Die Erfindung betrifft einen Faltenbalg mit mehreren um eine Rotationsachse umlaufend angeordneten, doppelkonusförmige Flanken aufweisenden Falten aus dünnwandigem thermoplastischen Elastomer, mit zwei Bundbereichen unterschiedlichen Durchmessers, insbesondere zur Abdichtung von Gleichlaufdrehgelenken.

Faltenbälge der genannten Art sind beispielsweise aus der DE-A-34 17 709 bekannt. Hierbei ist vorgesehen, daß zumindest bei den durchmessergrößeren Falten die zum größeren Bund gerichteten Vorderflanken einen größeren Öffnungswinkel zur Achse aufweisen als die zum kleineren Bund gerichteten Flanken, wobei sich dieses Verhältnis über der Länge des Faltenbalges ebenso verändert wie die Höhe der Falten, die zum kleineren Bund hin zunimmt.

Die Praxis zeigt, daß an Bälgen dieser Form aus steifem thermoplastischem Elastomer, z.B. aus einem Material wie Hytrel (eingetragenes Warenzeichen der Firma Dupont) oder Santoprene (eingetragenes Warenzeichen der Firma Monsanto) beim Abbeugen des Faltenbalges durch Beugebewegungen des eingeschlossenen Gelenks eine erhöhte Belastung an den radialen Außenbereichen der Flanken in der Nähe der Faltenspitzen auftritt, da zuerst an den Außenbereichen nahe der Faltenspitzen eine Anlage erfolgt und damit dort zu einem örtlich erhöhten Verschleiß führt. Bei axialen Einfedern infolge eines Zusammenschiebens des eingeschlossenen Gelenks erfolgt aufgrund der ungleichen Form der Falten der zuvor beschriebene Vorgang zuerst an einzelnen der Falten, an denen dadurch eine besonders große Belastung auftritt. Weiterhin kann aufgrund der Form der größeren Falten ein geräuschbehaftetes Umklappen von einzelnen Falten erfolgen, insbesondere bei zugleich gebeugtem Gelenk, das aufgrund der erhöhten Formänderungsarbeit auch zu Schäden führen kann.

Hiervon ausgehend ist es Aufgabe der vorliegenden Erfindung, einen Faltenbalg der eingangs genannten Art so auszugestalten, daß die den Verschleiß am Faltenbalg bestimmenden Kräfte bei der Anlage sich gegenüberliegender Faltenflanken bei gebeugtem und/oder axial verkürzten Faltenbalg möglichst gering sind. Die Lösung hierfür besteht darin, daß in entspanntem Zustand des Faltenbalgs die zum Bund kleineren Durchmessers gerichteten Flanken der Flaten einen Öffnungswinkel von mindestens 60° zur Rotationsachse haben und daß die zum Bund größeren Durchmessers gerichteten Flanken der Falten einen Öffnungswinkel von weniger als 50° zur Rotationsachse bilden und daß zumindest die beiden vollständigen Falten größten Durchmessers gleiche Flankenhöhen aufweisen und somit von zwei Konen gleichen Öffnungswinkels außen und innen eingehüllt werden. Hierdurch entsteht ein hochflexibler Faltenbalg, bei dem die jeweils zum größeren Bund gerichteten Flanken eine gewisse Eigensteifigkeit haben und sich insgesamt axial oder durch Abwinkelung zueinander verschieben, während die jeweils zum kleineren Bund gerichteten Flanken die Wirkung einer elastischen Membran mit demgegenüber geringer Formsteifigkeit aufweisen, die die genannten Bewegungen der erstgenannten Flanken elastisch aufnehmen.

Nach einer besonders günstigen Ausführung sind dabei die zum kleinen Bund gerichteten Flanken besonders flach mit Öffnungswinkeln von 70 bis 85° ausgestaltet. Mit der Montage erfolgt in der Regel eine gewisse Verkürzung des Faltenbalges, so daß die genannten Winkel im Betrieb jeweils etwas größer sind.

Durch die Gleichförmigkeit der Falten kommt eine Gleichförmigkeit ihrer Verformung zustande, die ein etwa gleichzeitiges Anliegen der sich gegenüberliegenden Flanken benachbarter Falten bewirkt, so daß erhöhte Kräfte durch frühzeitiges Anliegen an einzelnen Flankenpaarungen vermieden werden.

In Weiterführung dieses Gedankens sind insbesondere mit Ausnahme der kleinsten vollständigen Falte sämtliche vollständigen Falten innerhalb der genannten Konen mit gleichem Öffnungswinkel gleichartig ausgeführt.

Bevorzugt sind die Flanken selber als rein kegelabschnittsförmige Flächen ausgeführt, so daß die Anlage zwischen den Falten zur Reduzierung örtlicher Anlagedruckspitzen zunächst mantellinienförmig zustande kommen.

In an sich bekannter Ausführung ist zwischen den Flanken, benachbarter Falten innen ein im Längsschnitt U-förmiger Verbindungsringkörper geringer Öffnungsbreite von beispielsweise 2 mm vorgesehen. Das Wandstärkenverhältnis von Faltental zu Faltenspitze ist in einem Größenbereich von < 2 : 1 zu halten. Dabei soll die Wandstärke an der Faltenspitze ≦ 1 mm sein, das heißt sehr dünnwandig, um die Flexibilität zu erhöhen.

Zur Herstellung der genannten Faltenbälge wird bevorzugt das Blasverfahren angewandt.

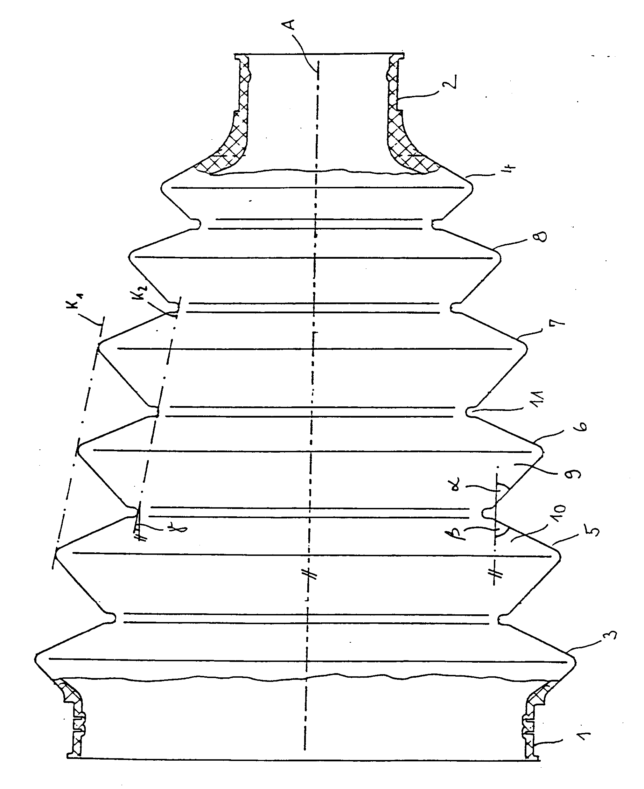

Ein bevorzugtes Ausführungsbeispiel eines erfindungsgemäßen Faltenbalges ist in der Figur dargestellt.

Der gezeigte Faltenbalg umfaßt die zwei Bundbereiche 1 und 2, aus denen jeweils eine größte Falte 3 und eine kleinste Falte 4 ausgeformt sind. Dazwischen liegen drei untereinander gleichartige größere vollständige Falten 5 bis 7 und eine kleinere Falte 8. Die Spitzen und Täler der größeren Falten werden durch Konen K₁, K₂ gleichen Öffnungswinkels γ eingehüllt, die einen Öffnungswinkel von ca. 10° zur Rotationsachse A haben. Die Falten 5 bis 7 haben jeweils eine zum größeren Bund gerichtete Flanke 9 mit einem Öffnungswinkel α von ca. 45° zur Längsachse und einen zum kleineren Bund gerichtete steilere Flanke 10 mit einem Öffnungswinkel β von ca 65° zur Achse. Jeweils zwischen zwei Falten sind im Längsschnitt U-förmige Verbindungsringe 11 vorgesehen.

### Bezugszeichenliste

- 1: Bund (groß)
- 2: Bund (klein)
- 3: Falte (groß)
- 4: Falte (klein)
- 5, 6, 7: Falten
- 8: Falte
- 9: Flanke
- 10: Flanke
- 11: Verbindungsring

## Patentansprüche

1. Faltenbalg mit mehreren um eine Rotationsachse (A) umlaufend angeordneten, doppelkonusförmige Flanken (9,10) aufweisenden Falten (3-8) aus dünnwandigem thermoplastischem Elastomer, mit zwei Bundbereichen (1,2) unterschiedlichen Durchmessers, insbesondere zur Abdichtung von Gleichlaufdrehgelenken,
dadurch gekennzeichnet,
daß im entspannten Zustand des Faltenbalgs die zum Bund kleineren Durchmessers (2) gerichteten Flanken (10) der Falten einen Öffnungswinkel (β) von mindestens 60° zur Rotationsachse (A) haben und daß die zum Bund größeren Durchmessers (1) gerichteten Flanken (9) der Falten (3-8) einen Öffnungswinkel (α) von weniger als 50° zur Rotationsachse (A) bilden, und
daß zumindest die beiden vollständigen Falten größten Durchmessers (5, 6) gleiche Flankenhöhen aufweisen und somit von zwei Konen (K₁, K₂) gleichen Öffnungswinkels (γ) außen und innen eingehüllt werden.

2. Faltenbalg nach Anspruch 1,
dadurch gekennzeichnet,
daß die zum kleineren Bund (2) gerichteten Flanken (10) der Falten einen Öffnungswinkel (β) von 70 bis 85° zur Rotationsachse (A) aufweisen.

3. Faltenbalg nach Anspruch 1,
dadurch gekennzeichnet,
daß mit Ausnahme der kleinsten vollständigen Falte (8) alle vollständigen Falten (5, 6, 7) gleiche Flankenhöhen aufweisen und von den Konen (K₁,K₂) gleichen Öffnungswinkels (γ) innen und außen eingehüllt werden.

4. Faltenbalg nach einem der Ansprüche 1 bis 3,
dadurch gekennzeichnet,
daß der Öffnungswinkel (γ) der Konen (K₁,K₂) im entspannten Zustand zwischen 5 und 15° zur Rotationsachse (A) liegt.

5. Faltenbalg nach einem der Ansprüche 1 bis 4,
dadurch gekennzeichnet,
daß die Flanken (9, 10) der Falten (5 - 8) - bezogen auf ihre Mittelebene - reine Kegelmantelflächenabschnitte sind.

6. Faltenbalg nach einem der Ansprüche 1 bis 5,
dadurch gekennzeichnet,
daß das Verhältnis der Wandstärken zwischen Faltental zu Faltenspitze < 2 : 1 ist.

7. Faltenbalg nach einem der Ansprüche 1 bis 6,
dadurch gekennzeichnet,
daß die Wandstärke an den Faltenspitzen ≦ 1 mm ist.

## Claims

1. A convoluted boot having a plurality of folds (3 - 8) which are arranged so as to extend around a rotational axis (A) and comprise doubly conical flanks (9, 10), consisting of a thin-walled thermoplastic elastomer and having two collar regions (1, 2) of different diameters, especially for sealing constant velocity universal joints,
characterised in
that, in the untensioned condition of the convoluted boot, the flanks (10) of the folds facing the collar (2) with the smaller diameter have an opening angle (β) of at least 60° relative to the rotational axis (A) and that the flanks (9) of the folds (3 - 8) facing the collar (1) with the larger diameter form an opening angle (γ) of less than 50° relative to the rotational axis (A) and that at least the two complete folds (5, 6) of the greatest diameter comprise identical flank heights and are thus externally and internally enveloped by two cones (K₁, K₂) of the same opening angle (γ).

2. A convoluted boot according to claim 1,
characterised in
that the flanks (10) of the folds facing the smaller collar (2) comprise an opening angle (β) of 70° to 85° relative to the rotational axis (A).

3. A convoluted boot according to claim 1,
characterised in
that, with the exception of the smallest complete fold (8), all complete folds (5, 6, 7) comprise the same flank heights and are internally and externally enveloped by the cones (K₁, K₂) of the same opening angle (γ).

4. A convoluted boot according to any one of claims 1 to 3,
characterised in
that in the untensioned condition, the opening angle (γ) of the cones (K₁, K₂) ranges between 5° and 15° relative to the rotational axis (A).

5. A convoluted boot according to any one of claims 1 to 4,
characterised in
that, with reference to their central plane, the flanks (9, 10) of the folds (5 - 8) constitute purely conical envelope portions.

6. A convoluted boot according to any one of claims 1 to 5,
characterised in
that the wall thickness ratio between the fold valley and fold peak is < 2 : 1.

7. A convoluted boot according to any one of claims 1 to 6,
characterised in
that the wall thickness of the fold peaks is ≦ 1 mm.

## Revendications

1. Soufflet plissé comprenant plusieurs plis (3 à 8) disposés autour d'un axe de rotation (A), présentant des flancs biconiques (9, 10), faits d'un élastomère thermoplastique à paroi mince, et comportant deux régions de collets (1, 2) de différents diamètres, et notamment destinés à la protection des joints homocinétiques sous joint étanche,
caractérisé
en ce qu'à l'état détendu du soufflet plissé, les flancs (10) des plis qui sont dirigés vers le collet (2) de petit diamètre ont un angle d'ouverture (β) d'au moins 60° par rapport à l'axe de rotation (A) et en ce que les flancs (9) des plis (3 à 8) qui sont dirigés vers le collet (1) de grand diamètre forment un angle d'ouverture (α) de moins de 50° par rapport à l'axe de rotation (A), et
en ce qu'au moins les deux plis complets de diamètre maximum (5, 6) présentent les mêmes hauteurs de flancs et ont ainsi des surfaces enveloppes extérieure et intérieure constituées par deux cônes (K₁, K₂) de même angle d'ouverture (γ).

2. Soufflet plissé selon la revendication 1,
caractérisé
en ce que les flancs (10) des plis qui sont dirigés vers le petit collet (2) présentent un angle d'ouverture (β) de 70° à 85° par rapport à l'axe de rotation (A).

3. Soufflet plissé selon la revendication 1,
caractérisé
en ce qu'à l'exception du pli complet (8) de dimension minimum, tous les plis complets (5, 6, 7) présentent les mêmes hauteurs de flancs et ont des surfaces enveloppes intérieure et extérieure constituées par des cônes (K₁, K₂) de même angle d'ouverture (γ).

4. Soufflet plissé selon une des revendications 1 à 3,
caractérisé
en ce que l'angle d'ouverture (γ) des cônes (K₁, K₂) par rapport à l'axe de rotation (A) est d'entre 5° et 15° à l'état détendu.

5. Soufflet plissé selon une des revendications 1 à 4,
caractérisé
en ce que les flancs (9, 10) des plis (5 à 8) - rapportés à leur plan médian - sont exactement des simples segments de surfaces latérales de cônes.

6. Soufflet plissé selon une des revendications 1 à 5,
caractérisé
en ce que le rapport des épaisseurs de paroi entre le creux de pli et la pointe de pli est < 2:1.

7. Soufflet plissé selon une des revendications 1 à 6,
caractérisé
en ce que l'épaisseur de paroi aux pointes des plis est de ≦ 1 mm.
